# EUROPÄISCHE PATENTSCHRIFT

(11) **EP 0 826 541 B1**
(45) Veröffentlichungstag und Bekanntmachung des Hinweises auf die Patenterteilung: **14.11.2001**
(21) Anmeldenummer: 97114644.4
(22) Anmeldetag: 23.08.1997
(51) Int. Cl.: B60J 10/12

(54) **Fahrzeugdach mit einer Folge von Schiebelamellen**
Vehicle roof with a sequence of louvre-like sections
Toit de voiture avec une séquence de lamelles coulissantes

(30) Priorität: 24.08.1996 DE 19634325
(43) Veröffentlichungstag der Anmeldung: 04.03.1998
(73) Patentinhaber: WEBASTO KAROSSERIESYSTEME GmbH, D-82131 Stockdorf (DE)
(72) Erfinder: Kralik, Martin, 82363 Weilheim (DE); Seifert, Wolfgang, 92339 Beilngries (DE)
(74) Vertreter: Wiese, Gerhard

(56) Entgegenhaltungen:
- DE-C- 4 129 860
- FR-A- 2 516 871

## Beschreibung

Die Erfindung betrifft ein Fahrzeugdach mit einer Folge von Schiebelamellen gemäß dem Oberbegriff des Anspruch 1.

Ein derartiges Fahrzeugdach ist beispielsweise aus der DE 41 29 860 C1 bekannt. Ähnlich wie bei einem herkömmlichen Schiebehebedach werden bei diesem bekannten Fahrzeugdach die Schiebelamellen seitlich zur Dachöffnung abgedichtet. Das hierzu verwendete Hohlkammer-Dichtelement steht vom Dachöffnungsrand seitlich zur Lamelle vor und stößt großflächig gegen die stumpf ausgebildete Lamellenseitenkante. Während diese Dichtanordnung die erforderliche Dichtfunktion gewährleistet, ist die relativ hohe Dichtungsreibung bei Verwendung eines Lamellenmaterials mit größerer Wärmedehnung, wie beispielsweise Aluminium oder Kunststoff problematisch. Insbesondere bei Verwendung einer großen Anzahl bewegter Lamellen sind aufgrund der großen Reibflächen zwischen den Dichtelementen und den Schiebelamellen starke Antriebskräfte erforderlich. Wegen des nötigen Spielausgleichs quer zur Längsmitte der Dachöffnung zwischen Lamellenantriebsmechanik und Lamellen besteht aufgrund der stark eingeschränkten Lamellenbewegung quer zur Längsmitte der Dachöffnung ferner die Gefahr einer Verspannung des Lamellensystems.

Vergleichbare Probleme treten bei dem aus der DE 31 43 346 C2 bekannten Fahrzeughebedach auf, bei dem zur Abdichtung des Glasdeckels in der Dachöffnung gegenüber der angrenzenden Dachfläche ein Hohlkammer-Dichtelement vorgesehen ist, das zur Dachoberseite hin vorsteht und durch den Rand des geschlossenen Glasdeckels derart zusammengequetscht wird, daß es, den Dachdeckelrand sowie zusätzlich die Unterseite des Dachdeckels umschließend, im Querschnitt in etwa L-Form aufweist.

Eine Dichtungsanordnung für ein Fahrzeugdach mit einer Folge von Schiebelamellen unter Verwendung eines Hohlkammer-Dichtelements ist ferner aus der DE 42 33 507 C1 bekannt. Bei diesem bekannten Fahrzeugdach ist das Hohlkammer-Dichtelement in der Lamellenschließstellung zwischen der Unterseite des Dachöffnungsfalzes und einer Stufenfläche am Rand der Lamelle eingespannt, wobei die Stufenfläche in jeder Position der Lamelle stets unterhalb des Dachrandes verbleibt. Auf diese Dichtungsanordnung treffen die vorstehend angeführten Probleme nicht in gleicher Weise zu, da die Lamellen dort nicht nach oben aus der Dachöffnung austreten.

Eine Aufgabe der Erfindung besteht darin, ein Fahrzeugdach der eingangs genannten Art zu schaffen, das nur relativ geringe Antriebskräfte für die Schiebelamellen erfordert und die problemlose Verwendung eines Lamellenmaterials mit großer Wärmedehnung erlaubt.

Gelöst wird diese Aufgabe durch die kennzeichnenden Merkmale des Anspruchs 1. Vorteilhafte Weiterbildungen der Erfindung sind in den Unteransprüchen angegeben.

Während beim vorstehend abgehandelten Stand der Technik das Dichtelement entweder horizontal oder vertikal zwischen den Lamellen und dem Dachöffnungsseitenrand großflächig eingespannt ist, beschreitet demnach die Erfindung den neuen Weg eines kleinfächigeren Dichtkontakts aufgrund eines geneigten Verlaufs der Dichtfläche und vorzugsweise einer verrundeten Ausbildung der damit im Eingriff stehenden Lamellenseitenkante.

Aufgrund des geneigten Verlaufs der Dichtfläche des Hohlkammer-Dichtelements von der Dachöffnungsseitenkante ausgehend einwärts gerichtet, wird eine Schwimmbewegung der Lamellen quer zur Längsmitte der Dachöffnung sowie eine Wärmeausdehnung der Lamellen in dieser Richtung nicht behindert, so daß auch Lamellenmaterial relativ großer Wärmedehnung, wie beispielsweise Aluminium und Kunststoff problemlos verwendet werden kann, ohne daß starke Antriebskräfte für die Lamellenanordnung erforderlich sind. Eine Verspannungsgefahr des Lamellensystems wird aufgrund der ungehinderten Schwimmbewegung und Wärmeausdehnung der Lamellen zuverlässig verhindert.

Eine besonders geringe Dichtungsreibung wird dadurch erzielt, daß der Neigungswinkel der Dichtfläche des Hohlkammer-Dichtelements relativ zu den Lamellenhauptflächen ein spitzer Winkel ist. Dieser Winkel α beträgt vorzugsweise etwa zwischen 10° und 30°.

Unterstützt wird die Dichtwirkung durch die im unbelasteten Zustand auswärtsgewölbte Form des Dichtungswandabschnitts, dessen Außenseite die Dichtfläche des Hohlkammer-Dichtelements bildet.

Zur Minimierung der Dichtungsreibung verlaufen die Seitenwandabschnitte des Hohlkammer-Dichtelements vorzugsweise schräg derart, daß sie einer Belastung des Dichtungswandabschnitts durch die Lamellenseitenkante elastisch entgegenwirken, d.h. ohne Verformung aufnehmen können.

Zur Gewährleistung einer optimalen und dauerhaften Abdichtung gegenüber der Dachfläche ist das Hohlkammer-Dichtelement im Verbindungsbereich zwischen dem Dichtungswandabschnitt und seinem auswärts zum Dachöffnungsseitenrand weisenden Seitenwandabschnitt mit einer weiteren Dichtfläche versehen, die mit dem Dachöffnungsseitenrand bzw. -falz im Dichteingriff steht.

Gemäß einer weiteren vorteilhaften Ausbildung ist das Hohlkammer-Dichtelement mit einer Toleranzausgleichslippe versehen, die den seitlichen Dachöffnungsfalz untergreift und bevorzugt am Verbindungsbereich zwischen dem Dichtungswandabschnitt und dem dachöffnungsfalzseitigen Seitenwandabschnitt des Hohlkammer-Dichtelements angeordnet ist.

Vorteilhafterweise ist das Hohlkammer-Dichtelement mit demjenigen Wandabschnitt fest mit der Dachstruktur verbunden, der dem Dichtungswandabschnitt gegenüberliegt. Dadurch wird eine optimale Verformbarkeit des Hohlkammer-Dichtelements zugunsten einer dauerhaften Abdichtung gegenüber der Lamelle gewährleistet.

Gemäß einer weiteren vorteilhaften Ausbildung der Erfindung ist vorgesehen, daß die Lamellenseitenkante im Eingriffbereich mit dem Dichtungswandabschnitt verrundet, bevorzugt in Tropfenform gebildet ist. Auch dies trägt zur Minimierung der Reibung zwischen Dichtung und Lamelle bei. Die Tropfenform hat bevorzugt die Größe des im Kantenbereich erforderlichen Sicherheitsradius und ermöglicht damit eine wirtschaftliche Lamellenfertigung.

Schließlich erlaubt das erfindungsgemäß ausgebildete Hohlkammer-Dichtelement eine Verringerung des optischen Dichtspalts im Vergleich zum Stand der Technik.

Bevorzugte Ausführungsbeispiele der Erfindung der Erfindung sind nachstehend unter Bezugnahme auf die Zeichnungen näher erläutert. Es zeigt:
- Fig. 1: eine perspektivische schematische Ansicht eines Lamellendaches im teilweise geöffneten Zustand,
- Fig. 2: eine Ansicht entsprechend Fig. 1 bei voll geöffnetem Dach, und
- Fig. 3: in vergrößerter Darstellung den Teillängsschnitt entlang der Linie III-III von Fig. 1.

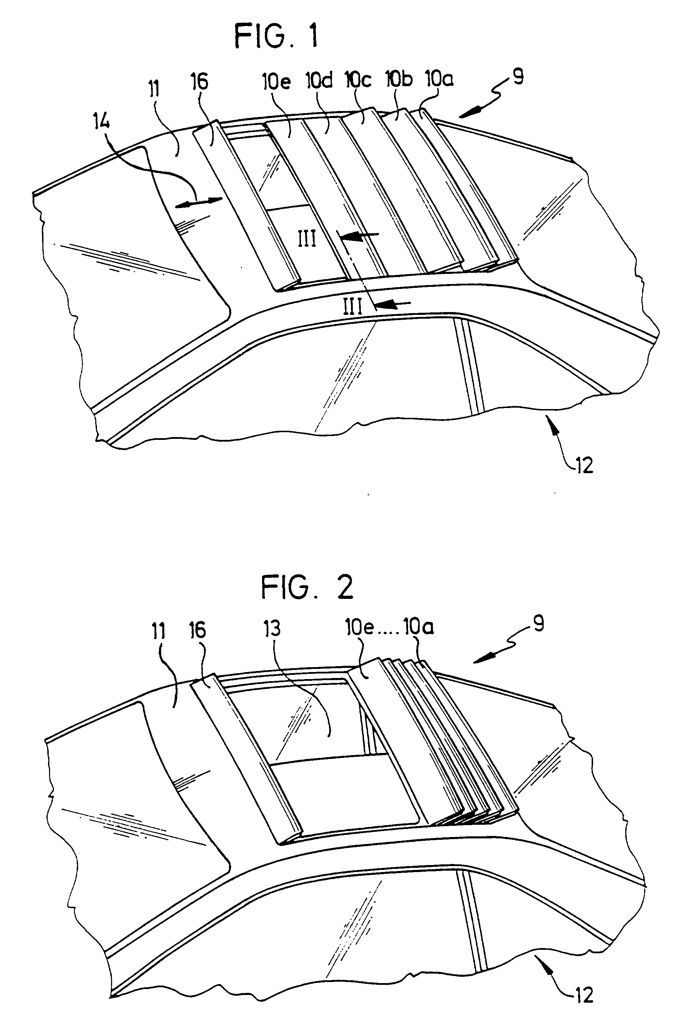

Das vorliegend erläuterte als Lamellendach zu bezeichnende Fahrzeugdach 9 weist, wie aus den Prinzipdarstellungen der Fig. 1 und 2 hervorgeht, eine Folge von Schiebelamellen 10a bis 10e auf. Diese Lamellen dienen dem wahlweisen Verschließen bzw. mindestens teilweise Freigeben einer Dachöffnung 13, die in einer festen Dachfläche 11 eines Kraftfahrzeugs 12 ausgebildet ist. Zum Öffnen und Verschließen des Daches 9 lassen sich die Lamellen 10a bis 10e verschieben, wobei im gezeigten Ausführungsbeispiel die mit dem Doppelpfeil angedeutete Verschieberichtung (14) parallel zur Fahrzeuglängsachse verläuft. Grundsätzlich sind aber auch andere Verschieberichtungen, z.B. quer zur Fahrzeuglängsachse, möglich. In ihrer Schließstellung stoßen die Lamellen 10a bis 10e mit ihren quer zur Verschieberichtung 14 verlaufenden Längskanten dichtend aneinander an. Dabei bilden sie einen flächigen Lamellenverbund, wie dies in Fig. 1 für die beiden Lamellen 10d und 10e angedeutet ist. Die Lamellen 10a bis 10e sind ferner jeweils um eine sich quer zur Verschieberichtung 14 erstreckende Schwenkachse verschwenkbar.

Eine vorliegend nicht näher erläuterte Verstellmechanik, die in an sich bekannter Weise aufgebaut sein kann, koordiniert die Verschiebe- und Schwenkbewegungen der einzelnen Lamellen 10a bis 10e derart, daß beim Verstellen der Schiebelamellen der flächige Lamellenverbund eine Translationsbewegung in der Verschieberichtung 14 ausführt und dieser Verbund beim Öffnen des Daches 9 im Bereich des in Öffnungsrichtung vorne liegenden Endes durch Herausbewegen der jeweils in Öffnungsrichtung vordersten Lamelle aus dem Verbund Lamelle für Lamelle aufgelöst bzw. beim Schließen des Daches wiederhergestellt wird. Im Verlauf des Öffnens des zuvor geschlossenen Daches 9 wird also zunächst nur die Lamelle 10a aus dem flächigen Lamellenverbund gelöst, indem diese Lamelle so nach oben verschwenkt wird, daß sie mit ihrem hinteren Rand vom hinteren Rand der Dachöffnung 13 freikommt. Die Lamelle 10a kann dann beginnend in dieser Schräglage zusammen mit den übrigen, im flächigen Lamellenverbund verbleibenden, d.h. nicht ausgeschwenkten Lamellen 10b bis 10e nach hinten verschoben werden, wobei die Lamelle 10a kontinuierlich in ihre Endlage weiter verschwenkt wird. Nachdem die Lamelle 10a ihre in den Fig. 1 und 2 veranschaulichte hintere Endstellung erreicht hat, wird die nächste Lamelle 10b ausgestellt. Dieses Spiel wiederholt sich, bis entsprechend Fig. 2 alle Schiebelamellen 10a bis 10e ausgestellt und nach hinten in ihre Offenstellung geschoben sind. Beim Schließen des Daches 9 wird ausgehend von der Offenstellung gemäß Fig. 2 zunächst nur die Lamelle 10e vorbewegt und in eine zur festen Dachfläche 11 parallele Lage nach unten zurückverschwenkt. Ein entsprechender Bewegungsablauf wird nacheinander für die folgenden Lamellen 10d bis 10e erzwungen, bis die Lamellen in flächigem Verbund in ihrer vorderen Endstellung stehen und die Dachöffnung 13 verschließen.

Bei der veranschaulichten Ausführungsform des Fahrzeugdachs 9 sitzt im Bereich des vorderen Endes der Dachöffnung 13 ein ausstellbarer, lamellenförmiger Windabweiser 16, der beim Einleiten des Öffnungsvorganges um eine quer zur Fahrzeuglängsachse verlaufende Schwenkachse in eine schräg nach hinten ansteigende Lage verschwenkt wird. Der Windabweiser 16 legt sich in der Schließstellung des Daches 9 mit seiner Hinterkante gegen die vordere Längskante der in der vorderen Endstellung stehenden Schiebelamelle 10e dichtend an. Er verschließt dabei den vordersten Teil der Dachöffnung 13. Gegebenenfalls kann die Auslegung aber auch so getroffen sein, daß der flächige Verbund der Lamellen 10a bis 10e in der Schließstellung von der Vorderkante bis zur Hinterkante der Dachöffnung 13 reicht und damit allein die Schließfunktion übernimmt. Dabei kann gegebenenfalls in für Schiebedächer an sich bekannter Weise ein Windabweiser vorgesehen sein, der bei geschlossenem Dach unter der festen Dachfläche verschwindet und der selbsttätig in eine Arbeitsstellung übergeht, wenn das Dach geöffnet wird. In den Fig. 1 und 2 ist ein Fahrzeugdach mit fünf Schiebelamellen 10a bis 10e dargestellt. Es versteht sich jedoch, daß die Anzahl der Schiebelamellen in Abhängigkeit von den jeweiligen Gegebenheiten grundsätzlich beliebig gewählt werden kann.

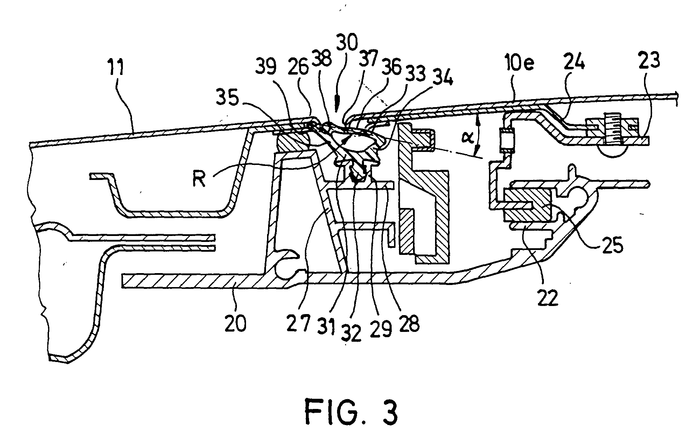

Wie aus Fig. 3 hervorgeht, weist das Fahrzeugdach 9 einen unterhalb der festen Dachfläche 11 angebrachten Dachrahmen 20 auf, der sich rings um die Dachöffnung 13 erstreckt und eine Rahmenöffnung begrenzt. Der Dachrahmen 20 trägt an beiden Seiten jeweils eine in der Verschieberichtung 14 verlaufende Führung in Form einer Führungsschiene 22. Die Ausbildung ist zu beiden Seiten des Daches 9 spiegelsymmetrisch zu einer Längsmittellinie, so daß die Darstellungen und Erläuterungen für die eine Dachseite sinngemäß auch für die andere Dachseite gelten. Ein Lamellenträger 23, dessen eines Ende über ein Verstärkungsblech 24 mit der Lamelle 10e verbunden ist, weist an seinem anderen Ende einen Gleitschuh 25 auf, der gleitend in der Führungsschiene 22 aufgenommen ist. Die Gleitverstellung der Lamellen bildet im einzelnen nicht den Gegenstand der vorliegenden Anmeldung. Bezüglich der Lamellenverstellung wird beispielsweise auf die einleitend abgehandelte DE 41 29 860 C1 verwiesen.

Im Bereich eines Dachöffnungsseitenrands 26 des Fahrzeugdaches 9 liegt ein Stützteil 27 des Dachrahmens 20 dichtend von unten an. An einer Querauskragung 28 des Stützteils 27 ist eine in Lamellenverschieberichtung 14 verlaufende Schiene 29 ausgebildet, mit der ein Hohlkammer-Dichtelement 30 fest verbunden ist. Das Hohlkammer-Dichtelement 30 weist eine Bodenwandung 31 auf, die sich auf der Schiene 29 abstützt und einen abwärts vorspringenden Verankerungssteg 32 enthält, der in die Schiene 29 eintritt und dort verankert ist. Eine dauerhafte Halterung des Verankerungsstegs 32 und damit des Hohlkammerdichtelements 30 in der Schiene 29 wird dadurch erreicht, daß der Verankerungssteg 32 mit Widerhaken ausgebildet ist, die in komplementär gebildete Rillen in der Schiene 29 eingreifen. Das Hohlkammer-Dichtelement 30 weist ferner einen oben liegenden Wandabschnitt 33 auf, der mit dem Bodenwandungsabschnitt 31 über Seitenwandabschnitte 34 und 35 verbunden ist, die in Richtung auf den Verankerungssteg 32 schräg aufeinander zu verlaufen.

Der Dichtungswandabschnitt 33 weist mit seiner außen liegenden Dichtfläche 36 zur Dachoberseite und verläuft in Richtung auf die Längsmitte der Dachöffnung 13 relativ zur Lamelle 10e geneigt, und die Lamellenseitenkante 37 steht etwa mittig mit der Dichtfläche 36 im Eingriff, wenn sich die Lamelle 10e in der in Fig. 3 gezeigten Schießstellung befindet. Aufgrund dieses Dichteingriffs drückt die Lamellenseitenkante 37 vor allem mit ihrer Unterkante den Dichtungswandabschnitt 33, der im unbelasteten Zustand auswärts gewölbt ist, einwärts in den Hohlraum des Dichtelements 30 hinein, wodurch sich die Dichtfläche 36 dichtend an die Kontur der Lamellenseitenkante 37 anschmiegt, die in der dargestellten Ausführungsform als tropfenförmiger Falz gebildet ist, dessen Ausbauchung mit der Dichtfläche 36 des Hohlkammer-Dichtelements 30 zusammenwirkt. Der Neigungswinkel α, den die Dichtflächen 36 mit der Fläche der Schiebelamellen 10a - 10e einschließen, ist als spitzer Winkel ausgelegt, der etwa 10° bis 30° beträgt.

Im Verbindungsbereich des Dichtungswandabschnitts 33 mit dem dachöffnungsfalzseitigen Seitenwandabschnitt 35 des Hohlkammer-Dichtelements 30 ist eine konkav gewölbte Dichtfläche 38 gebildet, deren Formverlauf in etwa komplementär dem Formverlauf des Dachöffnungsseitenrands bzw. -falzes entspricht, an den sich diese Dichtfläche 38 dichtend anschmiegt. In Verlängerung der Dichtungsseitenwand 35 in Aufwärtsrichtung ist eine über die Dichtfläche 38 vorstehende Toleranzausgleichslippe 39 gebildet, die den seitlichen Dachöffnungsfalz untergreift, und sicherstellt, daß die Dichtfläche 38 auch dann stets im dichtenden Eingriff mit dem Dachöffnungsfalz steht, wenn der Dichtungswandabschnitt 33 durch die Lamellenseitenkante 37 belastet ist.

Die Tropfenform der Lamellenseitenkante 37 weist bevorzugt den erforderlichen Sicherheitsradius R (z.B. R = 2,5 mm) auf, der an der Lamelle umlaufend gebildet ist und deren wirtschaftliche Fertigung gewährleistet.

Die Lage des Hohlkammer-Dichtelements 30 unter der Lamellenseitenkante 37 sowie der geneigte Verlauf der Dichtfläche 36 des Dichtungswandabschnitts 33 erlauben eine Schwimmbewegung und ungehinderte Wärmeausdehnung der Lamelle 10e in der Richtung quer zur Längsmitte der Dachöffnung bzw. quer zur Lamellen-Verschieberichtung 14. Dadurch ist die beim Stand der Technik auftretende Verspannungsgefahr des Lamellensystems ausgeschlossen. Aufgrund der geneigten Ausrichtung der Dichtfläche 36 gegenüber der Lamellenseitenkante 37 wird gewährleistet, daß bei zuverlässiger und dauerhafter Abdichtung aufgrund kleiner Reibflächen zwischen dem Hohlkammer-Dichtelement 30 und der Lamelle 10e relativ geringe Antriebskräfte für das Lamellendach erforderlich sind.

Bevorzugt ist die Dichtfläche 36 des Hohlkammer-Dichtelements 30 so bemessen und angeordnet, daß diese bei Angriff der Lamellenseitenkante 37 maximal bis zu 50% zusammengedrückt wird.

### Bezugszeichenliste

- 9: Fahrzeugdach
- 10a-e: Schiebelamellen
- 11: (feste) Dachfläche
- 12: Kraftfahrzeug
- 13: Dachöffnung
- 14: Verschieberichtung
- 16: Windabweiser
- 20: Dachrahmen
- 22: Führungsschiene
- 23: Lamellenträger
- 24: Verstärkungsblech
- 25: Gleitschuh
- 26: Dachöffnungsseitenrand
- 27: Stützteil (von 20)
- 28: Querauskragung (von 27)
- 29: Schiene (an 28)
- 30: Hohlkammer-Dichtelement
- 31: Bodenwandung (von 30)
- 32: Verankerungssteg (von 30)
- 33: (oben liegender) Wandabschnitt (von 30)
- 34: Seitenwandabschnitt (von 30)
- 35: Seitenwandabschnitt (von 30)
- 36: (außen liegende) Dichtfläche (an 33)
- 37: Lamellenseitenkante
- 38: Dichtfläche (an 30, gegen 26)
- 39: Toleranzausgleichslippe

## Patentansprüche

1. Fahrzeugdach mit einer Folge von Schiebelamellen (10) zum wahlweisen Verschließen oder mindestens teilweisen Freigeben einer Dachöffnung (13) in einer festen Dachfläche (11), wobei die Lamellen (10) in der Schließstellung aneinander anstoßen und einen flächigen Lamellenverbund bilden sowie entlang von Führungen (22) derart gerührt sind, daß beim Verstellen der Lamellen (10) in Fahrzeuglängsrichtung der flächige Lamellenverbund eine Translationsbewegung ausführt, welche bewirkt, daß der Verbund durch Verschwenken jeweils einer einzelnen Lamelle (10e) nach oben in Öffnungsrichtung gelöst bzw. durch Verschwenken nach unten beim Schließen des Daches wiederhergestellt wird, wobei jede Lamelle (10e) in der Schließstellung beidseits der Dachöffnung (13) mittels eines Hohlkammer-Dichtelements (30) abgedichtet ist, das über eine Dichtfläche (36) mit der Lamellenseitenkante (37) im Dichteingriff steht, wobei die Lamellenseitenkante (37) in der Schließstellung in etwa mittig mit der Dichtfläche (36) im Eingriff steht, **dadurch gekennzeichnet, daß** die Dichtfläche (36) zur Dachoberseite weist und in der Schließstellung in Richtung auf die Längsmitte der Dachöffnung (13) relativ zur Lamelle (10e) nach unten geneigt verläuft.

2. Fahrzeugdach nach Anspruch 1, **dadurch gekennzeichnet, daß** der Neigungswinkel α der Dichtfläche (36) relativ zu den Hauptflächen der Lamelle (10e) ein spitzer Winkel ist, der vorzugsweise etwa zwischen 10° und 30° beträgt.

3. Fahrzeugdach nach Anspruch 1 oder 2 , **dadurch gekennzeichnet, daß** der Dichtungswandabschnitt (33), dessen Außenseite die Dichtfläche (36) bildet, im unbelasteten Zustand auswärts gewölbt ist.

4. Fahrzeugdach nach Anspruch 1, 2 oder 3, **dadurch gekennzeichnet, daß** das Hohlkammer-Dichtelement (30) zwei in Fahrzeuglängsrichtung verlaufende, einander gegenüberliegende Seitenwandabschnitte (34, 35) aufweist, die ausgehend vom Dichtungswandabschnitt (33) schräg aufeinander zu verlaufen.

5. Fahrzeugdach nach einem der Ansprüche 1 bis 4, **dadurch gekennzeichnet, daß** das Hohlkammer-Dichtelement (30) im Verbindungsbereich zwischen dem Dichtungswandabschnitt (33) und seinem benachbart zum Dachöffnungsseitenrand (26) liegenden Seitenwandabschnitt (35) eine weitere Dichtfläche (38) aufweist, die mit dem Dachöffnungsseitenrand (26) im Dichteingriff steht.

6. Fahrzeugdach nach Anspruch 5, **dadurch gekennzeichnet, daß** das Hohlkammer-Dichtelement (30) eine Toleranzausgleichslippe (39) aufweist, die den Dachöffnungsseitenrand (26) untergreift.

7. Fahrzeugdach nach Anspruch 6, **dadurch gekennzeichnet, daß** die Toleranzausgleichslippe (39) am Verbindungsbereich zwischen dem Dichtungswandabschnitt (33) und dem zum Dachöffnungsseitenrand (26) benachbarten Seitenwandabschnitt (35) des Hohlkammer-Dichtelements (30)angeordnet ist.

8. Fahrzeugdach nach einem der Ansprüche 1 bis 6, **dadurch gekennzeichnet, daß** das Hohlkammer-Dichtelement (30) auf seiner dem Dichtungswandabschnitt (33) gegenüberliegenden Seite mit der Dachkonstruktion fest verbunden ist.

9. Fahrzeugdach nach einem der Ansprüche 1 bis 8, **dadurch gekennzeichnet, daß** das Hohlkammer-Dichtelement (30) ein Elastomer ist.

10. Fahrzeugdach nach Anspruch 9, **dadurch gekennzeichnet, daß** das Hohlkammer-Dichtelement (30) als Siliconprofil ausgeführt ist.

11. Fahrzeugdach nach einem der Ansprüche 1 bis 10, **dadurch gekennzeichnet, daß** die Lamellenseitenkante (37) im Eingriffbereich mit dem Dichtungswandabschnitt (33) verrundet ausgebildet ist.

12. Fahrzeugdach nach Anspruch 11, **dadurch gekennzeichnet, daß** die Lamellenseitenkante (37) im Eingriffbereich mit dem Dichtungswandabschnitt (33) Tropfenform aufweist.

## Claims

1. Vehicle roof comprising a series of sliding slats (10) for closing or at least partially exposing a roof opening (13) in a fixed roof surface (11) as required, the slats (10) abutting against one another in the closed position and forming a flat interconnected slat assembly and being guided along guides (22) in such a manner that, when the slats (10) are displaced in the longitudinal direction of the vehicle, the flat interconnected slat assembly executes a translatory movement causing the interconnected assembly to be separated as each individual slat (10e) is pivoted upwards in the opening direction or re-assembled as they are pivoted downwards when the roof is closed, each slat (10e) being sealed in the closed position on either side of the roof opening (13) by means of a hollow-chamber sealing element (30) engaged in a sealing manner with the side edge (37) of the slat by means of a sealing surface (36), the side edge (37) of the slat being engaged with the sealing surface (36) approximately in its centre in the closed position, **characterised in that** the sealing surface (36) is directed towards the top of the roof and extends at a downward incline relative to the slat (10e) in the direction of the longitudinal centre of the roof opening (13) in the closed position.

2. Vehicle roof according to claim 1, **characterised in that** the angle of inclination α of the sealing surface (36) relative to the principal surfaces of the slats (10e) is an acute angle, preferably between approximately 10° and 30°.

3. Vehicle roof according to claim 1 or claim 2, **characterised in that** the sealing-wall section (33), the outer face of which forms the sealing surface (36), is curved outwardly in the non-stressed state.

4. Vehicle roof according to claim 1, 2 or 3, **characterised in that** the hollow-chamber sealing element (30) has two opposing side-wall sections (34, 35) extending in the longitudinal direction of the vehicle and extending obliquely relative to one another departing from the sealing-wall section (33).

5. Vehicle roof according to one of claims 1 to 4, **characterised in that** the hollow-chamber sealing element (30) is provided in the joining region between the sealing-wall section (33) and its side-wall section (35) adjacent to the side edge (26) of the roof opening with another sealing surface (38) engaged in a sealing manner with the side edge (26) of the roof opening.

6. Vehicle roof according to claim 5, **characterised in that** the hollow-chamber sealing element (30) has a tolerance-compensating lip (39) engaging under the side edge (26) of the roof opening.

7. Vehicle roof according to claim 6, **characterised in that** the tolerance-compensating lip (39) is arranged at the joining region between the sealing-wall section (33) and the side-wall section (35) of the hollow-chamber sealing element (30) adjacent to the side edge (26) of the roof opening.

8. Vehicle roof according to one of claims 1 to 6, **characterised in that** the hollow-chamber sealing element (30) is rigidly connected to the roof construction on its side opposite the sealing-wall section (33).

9. Vehicle roof according to one of claims 1 to 8, **characterised in that** the hollow-chamber sealing element (30) is an elastomer.

10. Vehicle roof according to claim 9, **characterised in that** the hollow-chamber sealing element (30) is designed as a silicone section.

11. Vehicle roof according to one of claims 1 to 10, **characterised in that** the side edge (37) of the slat is rounded in the region of engagement with the sealing-wall section (33).

12. Vehicle roof according to claim 11, **characterised in that** the side edge (37) of the slat is drop-shaped in the region of engagement with the sealing-wall section (33).

## Revendications

1. Toit ouvrant pour véhicule automobile composé d'une succession de lames coulissantes (10) utilisées au choix pour fermer ou du moins pour découvrir partiellement une ouverture de pavillon (13), ménagée dans une surface fixe (11) du pavillon, les lames (10) étant en butée l'une contre l'autre dans la position de fermeture et formant un assemblage de lames plat, et étant guidées le long de guidages (22) de manière telle qu'un déplacement des lames (10) dans le sens longitudinal du véhicule entraîne un mouvement de translation de l'assemblage de lames plat, à la suite de quoi l'assemblage est désolidarisé par le pivotement de chaque lame (10e) individuelle vers le haut dans le sens d'ouverture et est à nouveau reconstitué par un pivotement vers le bas au moment de la fermeture du toit ouvrant, chaque lame (10e), dans la position de fermeture, étant rendue étanche de part et d'autre de l'ouverture du pavillon (13) au moyen d'un élément d'étanchéité creux (30), qui entre en prise de manière étanche avec le bord latéral de lame (37) par l'intermédiaire d'une surface d'étanchéité (36), le bord latéral de lame (37) étant en prise avec la surface d'étanchéité (36) pratiquement en son milieu, dans la position de fermeture, **caractérisé en ce que** la surface d'étanchéité (36) est orientée vers la face supérieure du pavillon et, en position de fermeture, est orientée vers la ligne médiane longitudinale de l'ouverture du pavillon (13) de manière inclinée vers le bas par rapport à la lame (10e).

2. Toit ouvrant pour véhicule selon la revendication 1, **caractérisé en ce que** l'angle d'inclinaison α de la surface d'étanchéité (36) par rapport aux surfaces principales de la lame (10e) est un angle aigu, qui est compris de préférence entre 10° et 30°.

3. Toit ouvrant pour véhicule selon la revendication 1 ou 2, **caractérisé en ce que** la partie de paroi d'étanchéité (33), dont la face extérieure forme la surface d'étanchéité (36), est bombée vers l'extérieur en position non sollicitée.

4. Toit ouvrant pour véhicule selon la revendication 1, 2 ou 3, **caractérisé en ce que** l'élément d'étanchéité creux (30) comporte deux parois latérales (34, 35) en regard l'une de l'autre et s'étendant dans le sens longitudinal du véhicule, qui, à partir de la partie de paroi d'étanchéité (33), se dirigent l'une vers l'autre en oblique.

5. Toit ouvrant pour véhicule selon l'une quelconque des revendications 1 à 4, **caractérisé en ce que** l'élément d'étanchéité creux (30) comporte une autre surface d'étanchéité (38) dans la zone de liaison entre la partie de paroi d'étanchéité (33) et sa paroi latérale (35) adjacente au bord latéral de l'ouverture du pavillon (26), laquelle surface d'étanchéité est en prise de manière étanche avec le bord latéral de l'ouverture du pavillon (26).

6. Toit ouvrant pour véhicule selon la revendication 5, **caractérisé en ce que** l'élément d'étanchéité creux (30) comporte une lèvre de compensation du jeu (39), qui s'engage en dessous du bord latéral de l'ouverture du pavillon (26).

7. Toit ouvrant pour véhicule selon la revendication 6, **caractérisé en ce que** la lèvre de compensation du jeu (39) est disposée dans la zone de liaison entre la partie de paroi d'étanchéité (33) et la paroi latérale (35) de l'élément d'étanchéité creux (30), adjacente au bord latéral de l'ouverture du pavillon (26).

8. Toit ouvrant pour véhicule selon l'une quelconque des revendications 1 à 6, **caractérisé en ce que** l'élément d'étanchéité creux (30) est assemblé de manière inamovible avec la structure du pavillon sur son côté opposé à la partie de paroi d'étanchéité (33).

9. Toit ouvrant pour véhicule selon l'une quelconque des revendications 1 à 8, **caractérisé en ce que** l'élément d'étanchéité creux (30) est un élastomère.

10. Toit ouvrant pour véhicule selon la revendication 9, **caractérisé en ce que** l'élément d'étanchéité creux (30) est réalisé sous forme de profilé en silicone.

11. Toit ouvrant pour véhicule selon l'une quelconque des revendications 1 à 10, **caractérisé en ce que** le bord latéral de lame (37) est arrondi dans la zone de prise avec la partie de paroi d'étanchéité (33).

12. Toit ouvrant pour véhicule selon la revendication 11, **caractérisé en ce que** le bord latéral de lame (37) est conçu en forme de goutte dans la zone de prise avec la partie de paroi d'étanchéité (33).
